# EUROPEAN PATENT APPLICATION

(11) **EP 1 662 364 A1**
(43) Date of publication of application: **31.05.2006**
(21) Application number: 04771261.7
(22) Date of filing: 05.08.2004
(51) Int. Cl.: G06F 3/023, G06F 3/033

(54) **INPUT DEVICE**

(30) Priority: 05.09.2003 JP 2003314744
(71) Applicant: Kitazawa, Shuuji, Tokyo 1570071 (JP)
(72) Inventor: Kitazawa, Shuuji, Tokyo 1570071 (JP)
(74) Representative: Maillet, Alain
(86) International application number: PCT/JP2004/011234
(87) International publication number: WO 2005/024615

(57) **Abstract**

[Problem to be solved] To provide an input device which can input a large number of information codes fast while being carried out by one hand. [Means for solving the problem] An input device 10, which inputs information into an electronic apparatus, comprises a hold member 16 which is held by one hand; and input keys which are provided on that portion where the input keys are operable by the tip of a finger of the one hand holding the hold member 16, change into plural states when operated with the tip of the finger unreleased, and are for inputting information into the electronic apparatus which detects the plural states. The input keys are provided approximately perpendicular to an up and down direction of the hold member 1.

## Description

### Technical Field

The present invention relates to an input device which inputs information into an electronic apparatus.

### Background Art

Conventionally, a keyboard which has keys to be stroked by thumbs laid out on the top side, and keys to be stroked by fingers other than the thumbs laid out on the bottom side is known as an input device which inputs information into an electronic apparatus (see, for example, Patent Literature 1). According to this keyboard, information codes can be input with the keyboard held by both hands.

There has been known a cellular phone which inputs one information code by two key depressions with the first key depression taken as a row number operation and second key depression taken as a column number operation, (see, for example, Patent Literature 2). This cellular phone can input information codes by one hand, and input the information codes fast in comparison with circulation type information code entry of repeating depressing the same key to select an information code.

There is known a game controller comprising analog input sections which input analog information like steering information of a car into a game machine or the like, and digital input sections which input digital information such as selection information for selecting a game or the like, and start information for starting the game into the game machine or the like (see, for example, Patent Literature 3).

Further, there is known a remote controller which remotely controls a function like operation mode of a household electronic appliance, such as an air conditioner, and ON/OFF or the like of the household appliance or the like by operating a key (see, for example, Patent Literature 4).
Patent Literature 1: Japanese Unexamined Patent Publication No. H8-305471
Patent Literature 2: Japanese Unexamined Patent Publication No. 2003-224629
Patent Literature 3: Japanese Unexamined Patent Publication No. 2002-224444
Patent Literature 4: Japanese Unexamined Patent Publication No. 2002-188846

### Disclosure of the Invention

### Problems to be solved by the invention

According to those conventional technologies, however, in the case of the keyboard, there is a problem such that inputting information codes by one hand is not possible because the keyboard has multiple keys corresponding to the information codes, and requires a two-hand operation for inputting the information codes. There also is a problem such that its use with an analog input device which inputs analog information by a mouse or the like interrupts or restricts the entry of information codes.

In the case of the cellular phone, there is a problem that the speed of the inputting information codes is slower than the keyboard because the cellular phone has a small number of keys which correspond to the information codes, and requires the depression of a key twice for inputting a lot of information codes. There also is a problem such that its use with an analog input device is difficult.

In the case of the game controller, there is a problem such that because of inputting analog information taken into account, the game controller has a small number of the digital input sections for inputting digital information, and is not therefore suitable for inputting information codes which are digital information.

In the case of the remote controller, there is a problem such that it is necessary to provide keys in accordance with remotely-controlled functions or the like of an apparatus to be remotely controlled, so that the greater the number of functions, the larger the board surface on which the keys are provided becomes. There also is a problem such that they should be provided for each apparatus to be remotely controlled.

The invention has been made in view of such problems, and it is an object of the invention to provide an input device which can input a large number of information codes fast while being carried by one hand.

Another object of the invention is to provide an input device with which entry of information codes and entry of analog information can be made simultaneously without mutually limiting the inputs.

It is a further object of the invention to provide a universal input device which does not limit its applications.

### Means for solving the problems

To solve the problems, an input device according to the invention employs the following means. That is, the invention as set forth in claim 1 is characterized in that an input device which inputs information into an electronic apparatus comprises a hold member which is held by one hand; and an operation section which is provided on that portion where the operation section is operable by a tip of a finger of the one hand holding the hold member, changes into plural states when operated with the tip of the finger unreleased, and is for inputting information into the electronic apparatus which detects the plural states.

The invention as set forth in claim 2 is characterized in that in the invention according to claim 1, the operation section is provided approximately perpendicular to an up and down direction of the hold member.

The invention as set forth in claim 3 is characterized in that an input device which inputs information into an electronic apparatus comprises a main body with an operation section for inputting information into the electronic apparatus; and a hold member which is held by one hand, wherein the hold member is coupled to the main body, and the main body and the hold member are changeable into open mode in which the hold member can be so held as to make the operation section operable, and closed mode in which the main body and the hold member are folded over each other.

The invention as set forth in claim 4 is characterized in that in the invention according to claim 3, the main body and the hold member are coupled together via a base member, the main body and said hold member are rotatably coupled to said base member, and a rotation axis at which the main body and the base member are coupled together is approximately perpendicular to a rotation axis at which the hold member and the base member are coupled together, and the main body and the hold member become the open mode of an approximately L shape and closed mode of an approximately parallelepiped shape as the main body and the hold member respectively rotate around the rotation axes.

The invention as set forth in claim 5 is characterized in that an input device which inputs information into an electronic apparatus comprises a main body, a hold member which is held by one hand, and a base member which rotatably couples the main body and the hold member together, and has an operation section for inputting information into the electronic apparatus, wherein as the main body and the hold member respectively rotate around the rotation axes, a rotational axis at which the main body and the base member are coupled together and a rotation axis at which the hold member and the base member are coupled together are approximately perpendicular to each other, and the main body and the hold member are changeable into open mode of an approximately L shape in which the hold member can be so held as to make the operation section operable, and closed mode in which the main body and the hold member are folded over each other.

The invention as set forth in claim 6 is characterized in that an input device which inputs information into an electronic apparatus comprises a main body with an operation section for inputting information into the electronic apparatus, and a hold member which is held by one hand, wherein the main body and the hold member are coupled together via a base member, the main body and the hold member are rotatably coupled to the base member, and rotation of the rotational axis at which the main body and the base member are coupled together and rotation of the rotation axis at which the main body and the base member are coupled together are interlocked with each other.

The invention as set forth in claim 7 is characterized in that in the invention according to claim 6, the rotation of the rotational axis at which the main body and the base member are coupled together and the rotation of the rotational axis at which the hold member and the base member are coupled together can be locked and unlocked in the open mode.

The invention as set forth in claim 8 is characterized in that in the invention according to claim 7, the input device comprises an unlock pin which unlock a state where the rotation of the rotation axis at which the main body and the base member are coupled together is locked with the rotation of the rotation axis at which the hold member and the base member in the open mode, wherein the unlock pin is operable by a tip of any finger of the one hand holding the hold member.

The invention as set forth in claim 9 is characterized in that an input device which inputs information into an electronic apparatus comprises a main body with an operation section for inputting information into the electronic apparatus, and a hold member which is held by one hand, wherein the operation section is provided on top and bottom sides of the main body.

The invention as set forth in claim 10 is characterized in that in the invention according to any one of claims 1 to 9, the operation section is formed in a shape into which a finger tip fits.

The invention as set forth in claim 11 is characterized in that in the invention according to any one of claims 1 to 10, the operation section is so formed as to be restricted in parallel movement in accordance with the plural states, and is restorable in a circumferential direction.

The invention as set forth in claim 12 is characterized in that in the invention according to any one of claims 1 to 11, the operation section has a plurality of switches, and detects the plural states with one of or the plurality of switches.

The invention as set forth in claim 13 is characterized in that an input device which inputs information into an electronic apparatus comprises: an operation section which changes into plural states and is for inputting information into the electronic apparatus which detects the plural states; and a processor which allocates information codes in association with the plural states of the operation section, wherein the information codes allocated by the processor are input into the electronic apparatus.

The invention as set forth in claim 14 is characterized in that in the invention according to claim 13, the processor has groups of information codes which are hierarchized in association with the operation section and associated with the plural states of the operation section, and determines one information code based on selection of one group of information codes by detecting any of the plural states of the operation section.

The invention as set forth in claim 15 is characterized in that in the invention according to claim 14, the processor detects one information code by an acceptance-decision operation at the operation section.

The invention as set forth in claim 16 is characterized in that in the invention according to any one of claims 13 to 15, the processor has an information code which is not used in association with the plural states of the operation section.

The invention as set forth in claim 17 is characterized in that an input device which inputs information into an electronic apparatus comprises: an operation section which changes into plural states, and is for inputting information into the electronic apparatus which detects the plural states; and a processor which allocates information codes in association with the plural states of the operation sections, wherein the processor has information codes for replacing some of the information codes.

The invention as set forth in claim 18 is characterized in that in the invention according to any one of claims 13 to 17, the processor ensures external replacement of the information codes.

The invention as set forth in claim 19 is characterized in that in the invention according to any one of claims 13 to 18, the information code comprises a row and a column of Japanese KANA characters.

The invention as set forth in claim 20 is characterized in that in the invention according to any one of claims 1 to 19, the input device comprises a display section which displays the plural states of the operation section, or associations of the plural states of the operation section with the information codes allocated by the processor.

The invention as set forth in claim 21 is characterized in that in the invention according to claim 20, the display section displays the groups of information codes.

The invention as set forth in claim 22 is characterized in that in the invention according to claim 21, the display section displays a direction of a force to be applied to a finger tip for operating the operation section and an arrangement of the groups of information codes in association with each other.

The invention as set forth in claim 23 is characterized in that in the invention according to claim 21 or 22, the display section emphatically displays the selected group of information codes.

The invention as set forth in claim 24 is characterized in that in the invention according to any one of claims 21 to 23, the display section aggregates a candidate table comprising the groups of information codes at a bottom layer, an input-candidate-information code selected from the candidate table, and input-decision-information code decided by the acceptance-decision operation and displays them.

The invention as set forth in claim 25 is characterized in that in the invention according to any one of claims 20 to 24, all of or a part of a display of the display section is displayed on a display section of the electronic apparatus into which the information code is input.

The invention as set forth in claim 26 is characterized in that an input device which inputs information into an electronic apparatus comprises an operation section for inputting an information code into the electronic apparatus, and an analog input section for inputting analog information into the electronic apparatus, wherein the operation section and analog input section are operable simultaneously.

The invention as set forth in claim 27 is characterized in that in the invention according to any one of claims 1 to 26, the input device further comprises fixing means for fixing a writing tool.

The invention as set forth in claim 28 is characterized in that in the invention according to any one of claims 1 to 27, the hold member and the operation section are so provided as to enable an input operation with both hands.

The invention as set forth in claim 29 is characterized in that an input device which inputs information into an electronic device comprises a display section which displays input information, and allowing a lens which magnifies the display section to be provided.

The invention as set forth in claim 30 is characterized in that in the invention according to any one of claims 1 to 29, the input device has a built-in electronic-apparatus function.

### Effects of the invention

According to the invention as set forth in claim 1, the hold member is held by one hand, and the operation section provided on that portion where the operation section is operable by a tip of a finger of the one hand holding the hold member changes into plural states by the fingertip of the one hand holding the hold member, and the plural states are detected. Detected information is input into the electronic apparatus. Accordingly, because multiple pieces of information are detected by the operation section and detection by the operation section causes information to be input into the electronic apparatus.

According to the invention as set forth in claim 2, it is possible to surely operate the operation section by the tip of the finger of the one hand holding the hold member.

According to the invention as set forth in claim 3, it is possible to open the main body and the hold member and input the information when in use, and fold and close the main body and the hold member for storage when not in use.

According to the invention as set forth in claim 4, it is possible to open the main body and the hold member in an approximately L shape and input the information when in use, and fold and close the main body and the hold member in an approximately parallelepiped shape for storage when not in use.

According to the invention as set forth in claim 5, it is possible to open the main body and the hold member in an approximately L shape and input the information when in use, and fold and close the main body and the hold member in an approximately parallelepiped shape for storage when not in use, and replacement of the main body is possible at a low cost because the main body is not provided with the operation section.

The invention as set forth in claim 6 can make easy the operation of closing the main body and the hold member, and the operation of opening the main body and the hold member.

According to the invention as set forth in claim 7, it is possible to lock and unlock the main body and the hold member in open mode.

According to the invention as set forth in claim 8, it is possible to unlock the main body and the hold member in open mode by one hand.

According to the invention as set forth in claim 9, the operation section on the top side of the main body is operable by a thumb, and the operation section on the bottom side of the main body is operable by an index finger, a middle finger, or the like.

According to the invention as set forth in claim 10, it can be operated easily without removing a finger.

According to the invention as set forth in claim 11, a finger is guided in the operation direction at the time of operating the operation section, thereby preventing a wrong operation.

According to the invention as set forth in claim 12, a plurality of switches can detect as many states as double the number of switches plus one.

According to the invention as set forth in claim 13, it is possible to input information codes associated with the plural states of the operation section.

According to the invention as set forth in claim 14, it is possible to easily memorize information codes and make the input operation easy.

According to the invention as set forth in claim 15, as one information code is decided through the acceptance-decision operation, thereby preventing a wrong operation in the input operation.

According to the invention as set forth in claim 16, as an information code is not assigned to a state in which the operation section is difficult to operate, the operability of the input operation can be improved.

The invention as set forth in claim 17 can realize an input device which deals with multiple languages and multiple functions.

The invention as set forth in claim 18 can realize a universal input device without limiting its applications.

According to the invention as set forth in claim 19, it is possible to easily memorize information codes and make the input operation easy.

According to the invention as set forth in claim 20, the operation of the operation section can be made easy.

The invention as set forth in claim 21 can facilitate the operations of the operation section by the individual fingers easier.

According to the invention as set forth in claim 22, it is possible to make the operations of the operation section by the individual fingers further easier.

According to the invention as set forth in claim 23, it is possible to make the operations of the operation section by the individual fingers further easy.

According to the invention as set forth in claim 24, movement of the line of sight within the display section is reduced at the time of the input operation, thus ensuring a fast input.

According to the invention as set forth in claim 25, there is no movement of the line of sight between the display section of the input device and the screen of the electronic apparatus at the time of the input operation, thus ensuring a fast input.

According to the invention as set forth in claim 26, it is possible to input analog information and an information code simultaneously.

According to the invention as set forth in claim 27, it is possible to continuously carry out the entry of an information code and a writing work without changing the hold.

According to the invention as set forth in claim 28, it is possible to input an information code faster.

According to the invention as set forth in claim 29, it is possible to magnify and see the display section.

According to the invention as set forth in claim 30, the input device can be provided with the electronic-apparatus functions.

### Best Mode for Carrying Out the Invention

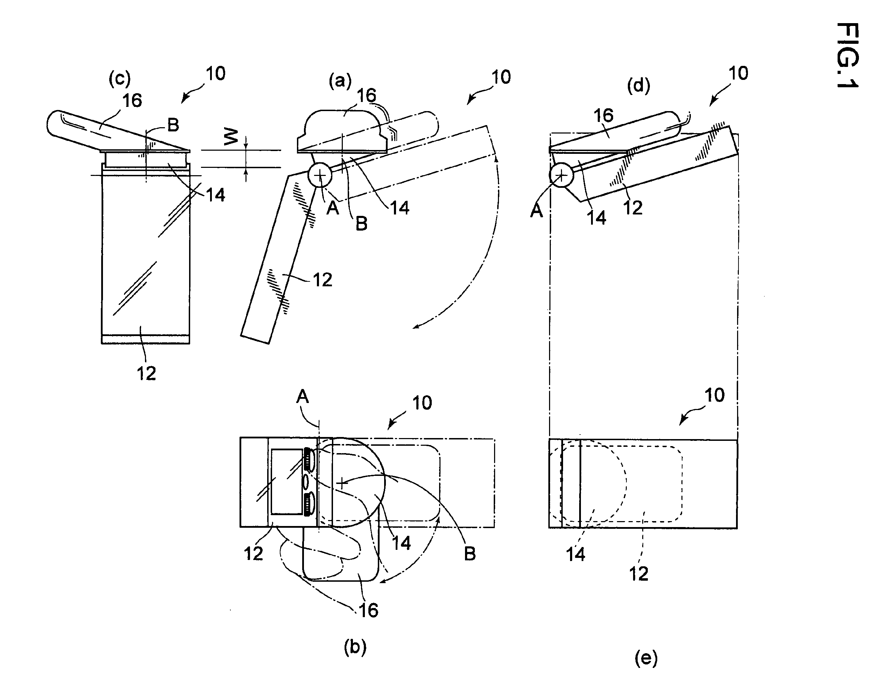

Embodiments of an input device according to the invention will now be explained based on the accompanying drawings. FIGS. 1 to 17 are diagrams for explaining a first embodiment of the input device according to the invention.

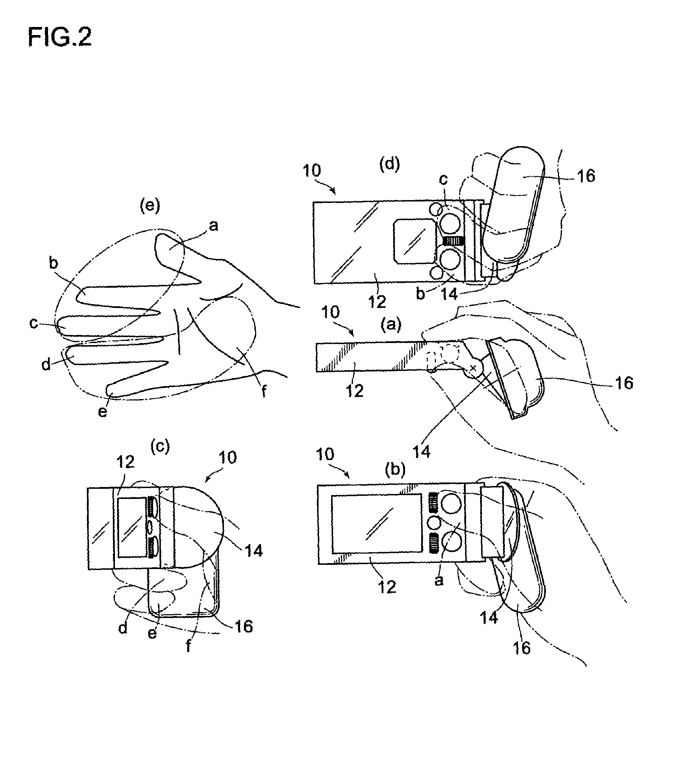

FIG. 1 is a diagram illustrating the contour of an input device 10 of the embodiment. FIG**.** 1(a) is a top view of the input device 10 in open mode, FIG. 2(b) is a side view of the input device 10 in open mode, FIG. 1(c) is a back view of the input device 10 in open mode, FIG. 1(d) is a top view of the input device 10 in closed mode, and FIG**.** 1(e) is a side view of the input device 10 in closed mode. The input device 10 generally comprises a main body 12, a base member 14 and a hold member 16. The main body 12 is formed in an approximately parallelepiped shape. The base member 14 is formed in an approximately triangular shape in viewing from the vertical direction, and is formed in a semicircular shape in viewing from the horizontal direction. The main body 12 and the base member 14 are coupled together in such a way that one end portion of the main body 12 and an apex edge of the triangular base member 14 are rotatable around an axis A (rotational axis). The hold member 16 is formed in an approximately parallelepiped shape which inclines in the longitudinal direction from the approximate center of the longitudinal direction toward one end. The base member 14 and the hold member 16 are coupled together in such a way that the bottom surface of the base member 14 and the inclined surface of the hold member 16 are rotatable around an axis B (rotational axis). When the input device 10 is in use, the main body 12 and the hold member 16 open into an approximately L shape in such a way that an angle between the central line of the main body 12 in the longitudinal direction and the central line of the hold member 16 in the longitudinal direction becomes roughly orthogonal (open mode). To hold the hold member 16 of the input device 10 by a right hand, the hold member 16 is rotated clockwise around the axis B to be open, and to hold the hold member 16 of the input device 10 by a left hand, the holding member 16 is rotated counterclockwise around the axis B to be open. When the input device 10 is not in use, the input device is folded in such a way that the main body 12 and the base member 14 face the hold member 16 and they become a parallelepiped shape (closed mode). When the input device 10 is in use, a clearance W is formed between the main body 12 and the hold member 16.

FIG. 2 is a diagram illustrating a state where the input device 10 is held by one hand. FIG. 2(a) is a top view of the input device 10, FIG. 2(b) is a front view of the input device 10, FIG. 2(c) is a side view of the input device 10, FIG. 2(d) is a back view of the input device 10, and FIG. 2(e) is a diagram illustrating a hand. The input device 10 is field by holding the hold member 16 by the finger cushion f of a thumb, a fourth finger d, and a little finger e of one hand. The thumb a, the index finger b, and a middle finger c operate input keys to be discussed later.

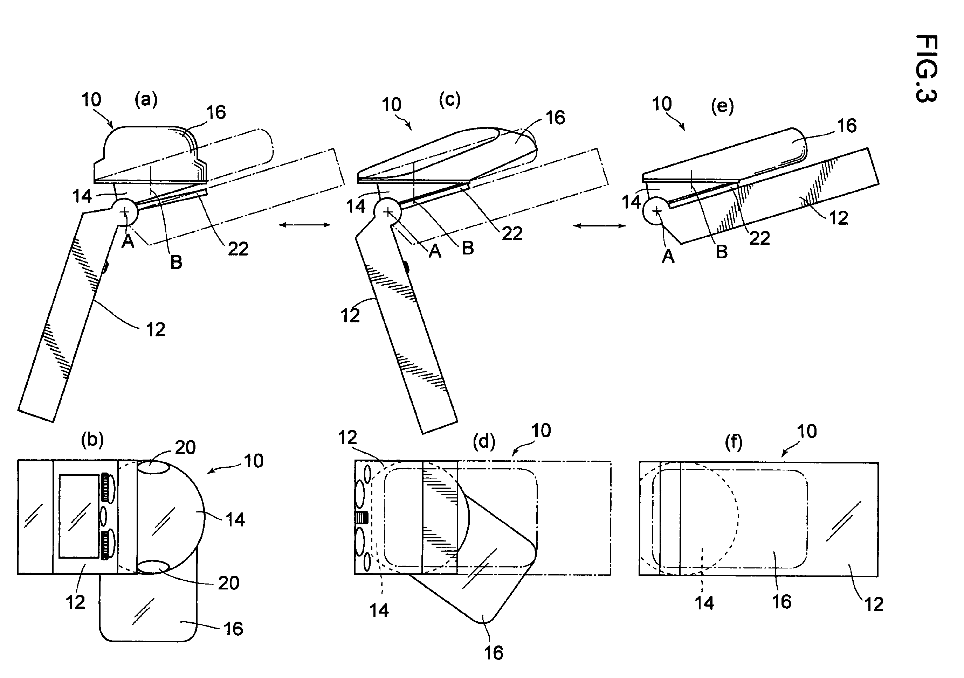

FIG. 3 is a diagram illustrating opening/closing operation of the main body 12 and hold member 16 of the input device 10. FIG. 3(a) is a top view of the input device 10 in open mode, FIG. 3(b) is a side view of the input device 10 in open mode, FIG. 3(c) is a top view of the input device 10 in intermediate mode between the open mode and the closed mode, FIG. 3(d) is a side view of the input device 10 in intermediate mode between the open mode and the closed mode, FIG. 3(e) is a top view of the input device 10 in closed mode, and FIG. 3(f) is a side view of the input device 10 in closed mode. With the main body 12 and hold member 16 of the input device 10 opened, rotations around the axis A and the axis B are locked by a lock mechanism. Unlock pins 20 for unlocking the rotations around the axis A and the axis B are provided at locations in the base section 14 where those pins are operable by the tip of the thumb with the main body 12 and the hold member 16 opened. Pressing the unlock pins 20 and the neighborhood of the axis A by the tip of the thumb allows the hold member 16 to rotate counterclockwise around the axis B, and the main body 12 and the hold member 16 to rotate in response to the counterclockwise rotation of the hold member 16 around the axis B in a direction in which the main body 12 and the hold member 16 face each other, thereby folding the input device 10. With the input device 10 folded, rotation of the held hold member 16 around the axis B rotates the main body 12 around the axis A in response to the rotation of the hold member so that the input device becomes a usable state where the main body 12 and the hold member 16 are opened. An auxiliary retainer 22 which rotates around an axis parallel to the axis A may be provided on the base member 14. When the input device 10 is in use, the auxiliary retainer 22 is so formed as to open at a sharp angle to the base member 14 and to fit the finger cushion of the thumb with the hold member 16 held. When the input device 10 is not in use, the auxiliary retainer 22 is folded together with the base member 14. The auxiliary retainer is for enhancing the holding of the hold member 16, and may be formed in an appropriate shape and may be provided on an appropriate portion.

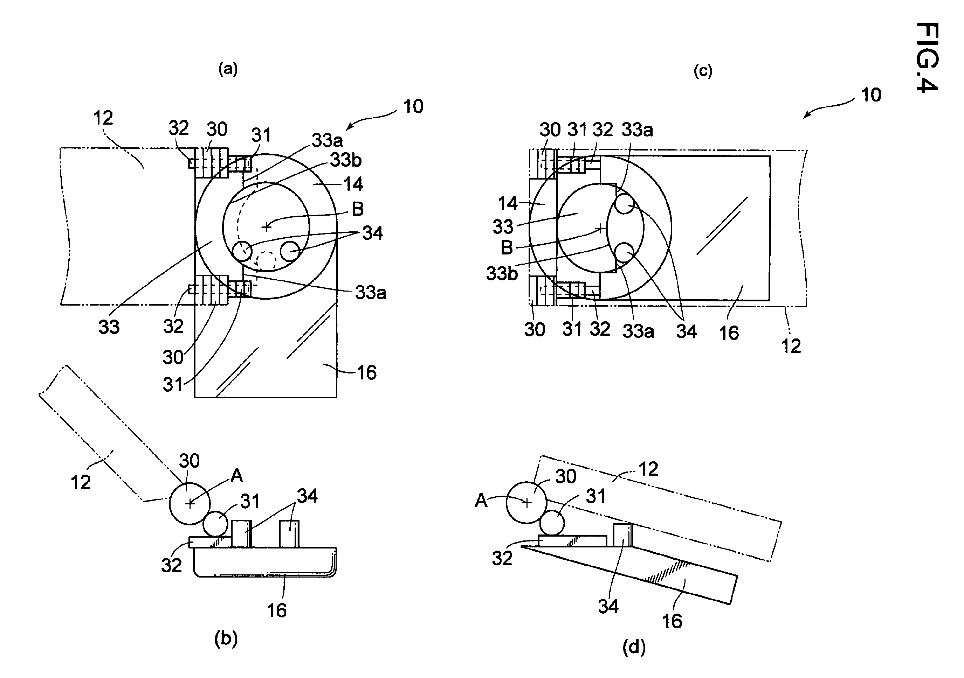

FIG. 4 is a diagram illustrating an example of a mechanism which interlocks the rotation of the main body 12 of the input device 10 around the axis A with the rotation of the hold member 16 around the axis B. FIG. 4(a) is a side view of the input device 10 in open mode, FIG. 4(b) is a bottom view of the input device 10 in open mode, FIG. 4(c) is a side view of the input device 10 in closed mode, and FIG. 4(d) is a bottom view of the input device 10 in closed mode. The axis A of the main body 12 is concentrically provided with a gear 30. The base member 14 is provided with a pinion 31 which engages with the gear 30, and a rack 32 which engages with the pinion 31. The rack 32 is formed integral with a cam plate 33. The cam plate 33 is so provided as to be slidable in the right and left direction to the base member 14. The right end face of the cam plate 33 is so formed as to have flat portions 33a and an arcuate portion 33b. The hold member 16 is provided with protrusions 34. An explanation will now be given of an operation in which the rotation of the main body 12 of the input device 10 around the axis A interlocks with the rotation of the hold member 16 around the axis B in the above-described structure. When the hold member 16 is rotated counterclockwise around the axis B from the open mode in FIGS. 4(a) and (b), the protrusions 34 rotate and move in a direction away from the cam plate 33. A non-illustrated coil spring for urging the main body 12 and the hold member 16 in the direction of closing them is provided between the main body 12 and the base member 14. Accordingly, the movement and the rotation of the protrusions 34 in the direction away from the cam plate 33 cause the main body 12 to rotate around the axis A in such a direction that the main body 12 and the hold member 16 are closed. When the main body 12 rotates around the axis A in such a direction that the main body 12 and the hold member 16 are closed, the gear 30 rotates, and the rack 32 moves rightward via the pinion 31, providing the closed mode in FIGS. 4(c) and (d). When the hold member 16 is rotated clockwise around the axis B from the closed mode in FIGS. 4(c) and (d), the protrusions 34 come in contact with the flat portions 33a of the cam plate 33, and push the cam plate 33 leftward. When having pushed leftward, the cam plate 33 moves leftward, and the rack 32 moves leftward. When the rack 32 moves leftward, the gear 30 rotates via the pinion 31, and the main body 12 rotates around the axis A in such a direction that the main body 12 and the hold member 16 are opened, providing the open mode of FIGS. 4(a) and (b). With the input device 10 be in open mode, the protrusions 34 contact the arcuate portion 33b of the cam plate 33 to prevent the cam plate 33 from further moving leftward.

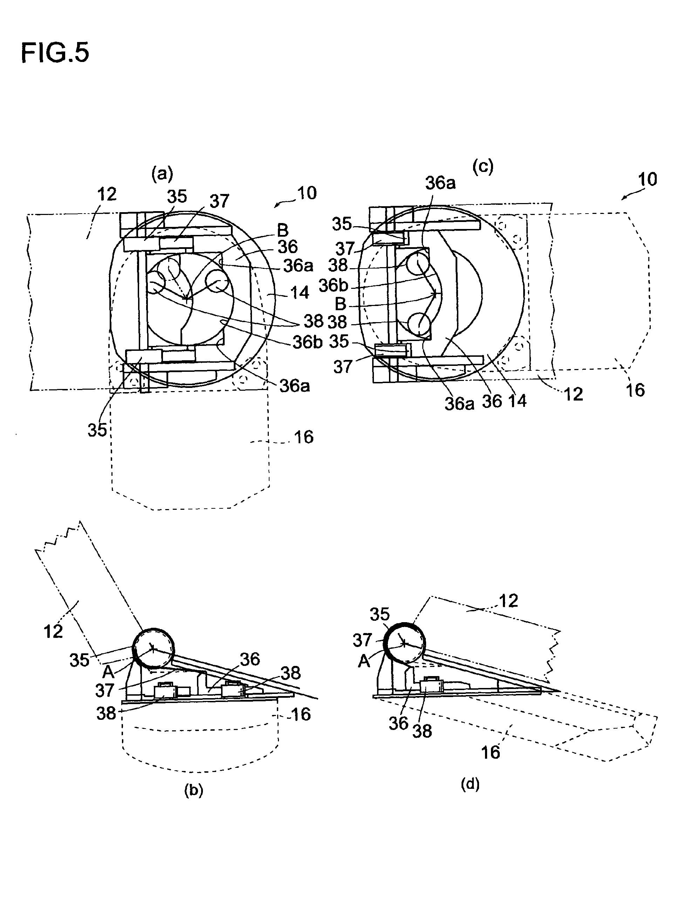

FIG. 5 is a diagram illustrating another example of a mechanism which interlocks the rotation of the main body 12 of the input device 10 around the axis A with the rotation of the hold member 16 around the axis B. FIG. 5(a) is a side view of the input device 10 in open mode, FIG. 5(b) is a bottom view of the input device 10 in open mode, FIG. 5(c) is a side view of the input device 10 in closed mode, and FIG. 5(d) is a bottom view of the input device 10 in closed mode. Cylindrical bodies 35 are provided coaxial to the axis A of the main body 12. The base member 14 is provided with a cam plate 36 slidable in the right and left direction. The cylindrical bodies 35 and the cam plate 36 are coupled together by steel belts 37. The left end face of the cam plate 36 is so formed as to have flat portions 36a and an arcuate portion 36b. The hold member 16 is provided with protrusions 38. An explanation will now be given of an operation in which the rotation of the main body 12 of the input device 10 around the axis A and the rotation of the hold member 16 around the axis B are interlocked with each other in the above-described structure. When the hold member 16 is rotated counterclockwise around the axis B in open mode from the open mode in FIGS. 5(a) and (b), the protrusions 38 rotate and move in the direction away from the cam plate 36. A non-illustrated coil spring for urging the main body 12 and the hold member 16 in the direction of closing them is provided between the main body 12 and the base member 14. Accordingly, when the protrusions 38 rotate and move in the direction away from the cam plate 36, the main body 12 rotates around the axis A in such a direction that the main body 12 and the hold member 16 are closed. When the main body 12 rotates around the axis A in such a direction that the main body 12 and the hold member 16 are closed, the cylindrical bodies 35 rotate so that the steel belts 37 are wound around the cylindrical bodies 35, the cam plate 36 moves leftward, providing the closed mode in FIGS. 5(c) and (d). When the hold member 16 is rotated clockwise around the axis B from the closed mode in FIGS. 5 (c) and (d), the protrusions 38 come in contact with the flat portions 36a of the cam plate 36, and push the cam plate 36 rightward. When being pushed rightward, the cam plate 36 moves rightward, and stretches the steel belts 37 from the cylindrical bodies 35. When the steel belts 37 are stretched, the cylindrical bodies 35 rotate, and the main body 12 rotates around the axis A in such a direction that the main body 12 and the hold member 16 are opened, providing the open mode in FIGS. 5(a) and (b). With the input device 10 being in open mode, the protrusions 38 come in contact with the arcuate portion 36b of the cam plate 36 to prevent the cam plate 36 from further moving rightward.

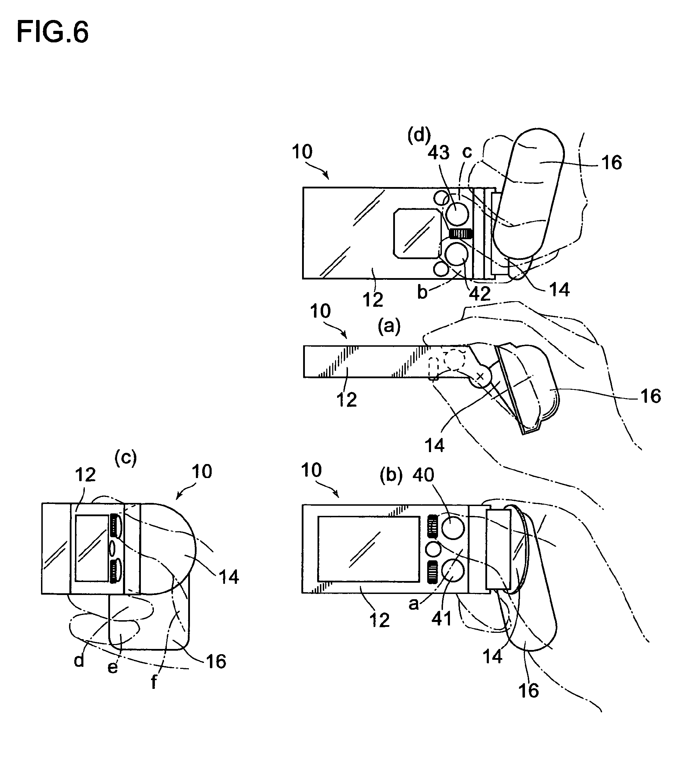

FIG. 6 is a diagram illustrating the arrangement of input keys of the input device 10. FIG. 6(a) is a top view of the input device 10, FIG. 6(b) is a front view of the input device 10, FIG. 6(c) is a side view of the input device 10, and FIG. 6(d) is a back view of the input device 10. Input keys 40 and 41 provided on the top side of the main body 12 are operated by the tip of the thumb a. Regarding input keys 42 and 43 provided on the bottom side of the main body 12, the input key 42 is operated by the tip of the index finger b, and the input key 43 is operated by the tip of the middle finger c.

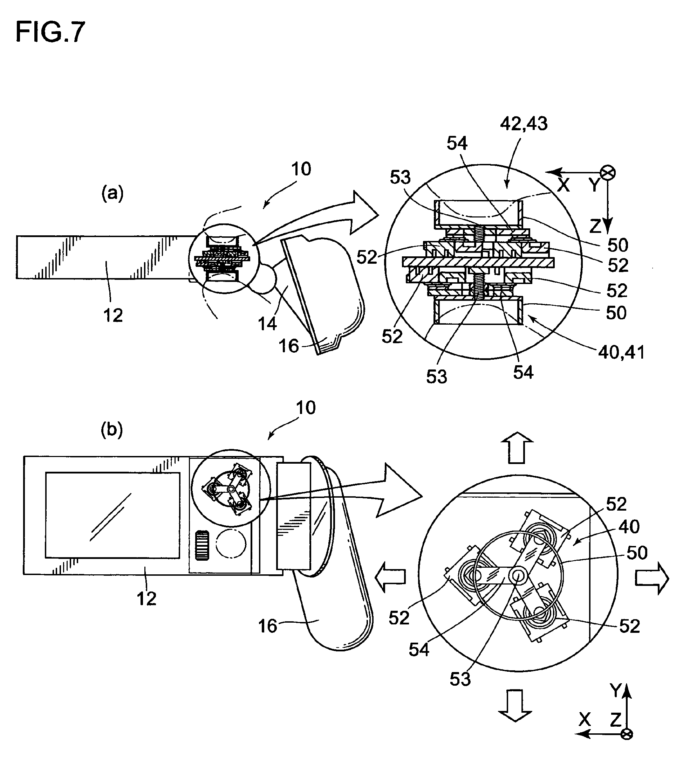

FIG. 7 is a diagram illustrating the shapes of the input keys of the input device 10. FIG. 7(a) is a top view of the input device 10, and FIG. 7(b) is a front view of the input device 10. Each of the input keys 40, 41, 42, and 43 generally comprises a key top 50, switches 52, a shaft 53, and retainers 54. The key top 50 is formed in a cylindrical shape with its upper surface open. The opening of the key top 50 is formed in a shape into which the tips of the thumb, the index finger, and the middle finger fit, and in such a shape and/or of a material that applies frictional force to the fingertips. The switches 52 are mounted on a printed wiring board. The three switches 52 are provided around the circumference of the key top 50. The key top 50 is retained by the retainers 54. The retainers 54 are coupled to the shaft 53. The lower end of the shaft 53 is fixed to the printed wiring board. Applying force to the key top 50 in the direction horizontal to the top and bottom sides of the main body 12 make the key top 50 incline in the direction vertical to the direction of action of the force, and the retainers 54 holding the key top 50 turn on any one of the switches 52 or adjoining two switches 52.

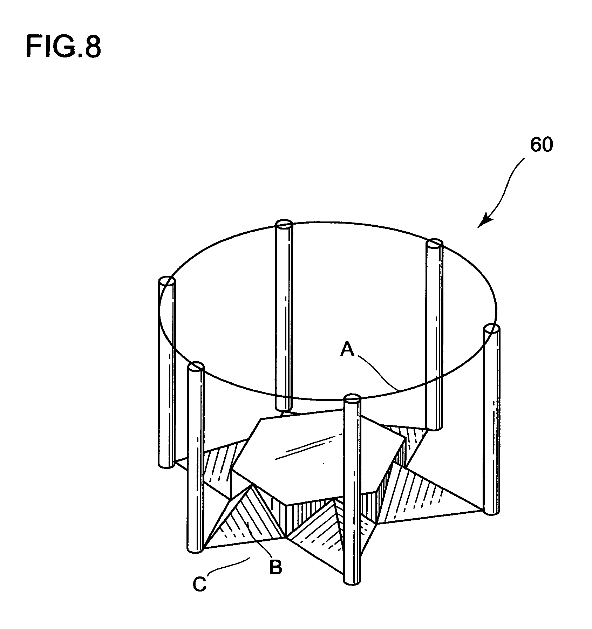

FIG. 8 is a diagram illustrating the principle of the input keys of the input device 10. The direction of the force which is applied to the input key from the fingertip in the operation of the input key and information are associated with each other. Accordingly, the binding force or the restoring force that acts in a predetermined direction is required for the input key to detect the predetermined direction and not to detect an intermediate direction. The switch is turned on and off by the amount of the force in the predetermined direction applied from the fingertip to thereby decide information. In other words, it is structured in such a way that the binding force or the restoring force acts in the circumferential direction, and a switch reaction force acts in the radial direction. An explanation will now be given with a structural principal diagram of modeling the structure of the input key. The example in the figure is an input key 60 which detects isogonal six directions. The input key 60 has a three-dimensional cam structure which is constituted by a mobile portion A, a restoring cam B, and a base C. The mobile portion A moves within the surface of the base C by an external operation. The restoring cam B is restricted within the surface of the base C, movable in parallel in the direction vertical to the surface of the base C, and pressed against the mobile portion A by a restoring spring. The restoring cam B has triangular pyramid protrusions which protrude in the isogonal six directions and take those isogonal six directions as the individual vertexes. Six poles protrude from the mobile portion A, and contact the leading ends of the six triangular pyramid protrusions of the restoring cam B in a point-contact manner. Contact portions of the restoring cam B and the poles have sufficient strength and abrasion resistance, and friction shall be negligible. The mobile portion A avoids the triangular pyramid protrusions of the restoring cam B, and can smoothly move in parallel in the six directions. In a case where the mobile portion A moves in an intermediate direction other than the six directions, the inclined surfaces of the triangular pyramid protrusions are pressed down. A restoring-spring reaction force originating that pressing pushes the leading ends of the poles of the mobile portion A, and is applied in the inclined-surface direction. Accordingly, this will ensure the original smooth movement of the mobile portion A in the parallel-movement direction. Although not illustrated in the figures, switches are respectively provided in the six directions, and forces act for turning off the switches. If the force in the radial direction becomes larger than a predetermined value, the switch is turned on. The cumulative force of a cam reaction force from the restoring cam B and the switch reaction force becomes a reaction force against an external operation of the mobile portion A. The reaction force of the restoring cam B can be divided into a component in the radial direction and a component in the circumferential direction. The force in the radial direction is in the same direction as that of the switch reaction force. The force in the circumferential direction acts as a force for restricting the direction of movement of the mobile portion A. Regarding operational feelings of the input key 60, only the feelings of turning on/off the switches are felt in the six directions in which the switches are provided. With regard to the forces in the directions other than those six directions, the restoring force by the restoring spring and the switch reaction force are felt. Although the number of directions in the example is six, it may take other numbers, and those directions may not be isogonal for each direction. As explained above, according to the input key 60, even if the direction of the force applied from the fingertip at the time of operation slightly differs from an intended direction, the force is directed to the predetermined direction, and detection of intended information by a rough operational feeling is possible.

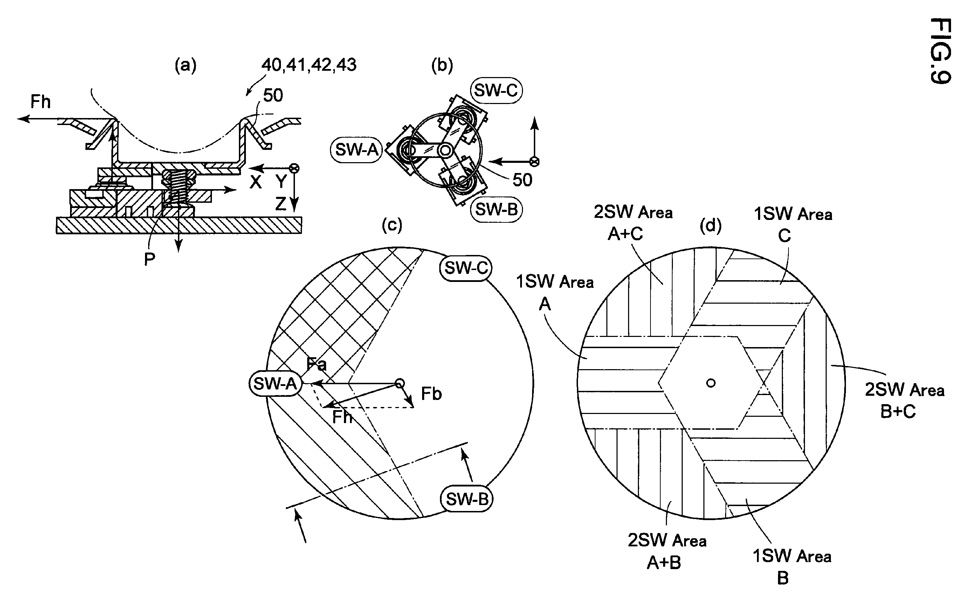

FIG. 9 is a diagram illustrating the structures of the input keys of the input device 10. FIG. 9(a) is a cross sectional view of the input keys 40, 41, 42, and 43 in the direction vertical to the top side of the main body 12, FIG. 9(b) is a diagram illustrating the arrangement of the three switches, FIG. 9(c) is a diagram illustrating an area where a switch A is turned on, and FIG. 9(d) is a diagram illustrating the area where one switch or two switches are turned on. An explanation will now be given of a method for detecting six states of the input keys 40, 41, 42, and 43 by the three switches. The three switches which can operate in the Z-direction are provided underneath the key top 50. Operating the key top 50 turns on one of the three switches or two of the switches simultaneously, and the direction of the force applied to the key top 50 from the fingertip is detected. All the switches are normally turned off. The key top 50 can slightly swing around a supporting point P without rotating in the horizontal plane. When the key top 50 is pressed leftward in the figure by the fingertip, the switch A is turned on. When it is pressed toward the lower left, the switch A and the switch B are simultaneously turned on. This enables detections of seven states of the input key including a state where the input key is not operated by the combinations of the ON/OFF states of the three switches. The simultaneous operation of the input keys by the three finger tips enables the detections of 7 x 7x 7 = 343 states of the input keys. Next, an explanation will be given of the balance of the forces applied to the input keys. An operational force received by the key top 50 is represented by a horizontal force Fh. This force with a supporting-force reaction force is balanced with a moment around the supporting point P. As the key top is pressed in the direction between the switch A and the switch B by the horizontal force Fh, the switch A and the switch B support the force, so that the horizontal force Fh is considered as the resultant force of Fa and Fb. A change in force due to the displacement of the key top 50 is neglected. Regardless of the ON/OFF of the switch B, the switch A is turned on/off depending on whether or not the component Fa of the horizontal force Fh in the direction of the switch A becomes greater than a threshold, so that the switch A is turned on if there is a vector force in the hatched area. Likewise, in the case where the direction of the horizontal force Fh is located between the switch A and the switch C, the oblique grid-like area is to be the ON area of the switch A. The same is true of the ON areas of the other switches B and C. In the vertical hatching area where two areas overlap each other, the two switches are turned on. In the horizontal hatching area where no areas overlap, a single switch is turned on. Each switch is turned on/off by the direction and magnitude of the force which is applied to the key top 50.

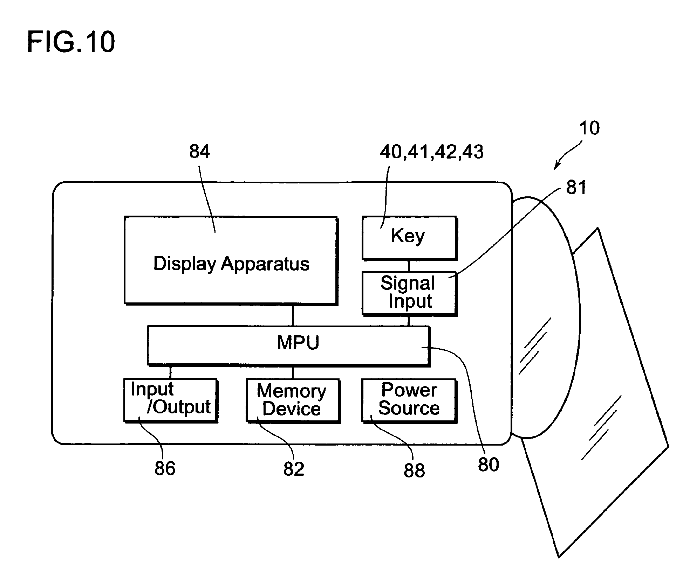

FIG. 10 is a block diagram illustrating the structure of the main body 12. The main body generally comprises the input keys 40, 41, 42, and 43, a signal input circuit 81 which receives on/off signals of the individual input keys, performs a process like elimination of chattering on those signals, and sends the processed signals toward an MPU 80, a memory device 82 which is connected to the MPU 80, and stores information code data and guidance screen data for guiding the operations of the individual input keys, a display apparatus 84 which is connected to the MPU 80, displays the information code and the operation statuses of the individual input keys to guide the operations thereof, and is provided on the top side of the main body 12, an input/output section 86 which is connected to the MPU 80, and inputs a decided information code into the electronic apparatus, and a power source 88 which supplies power to the main body 12.

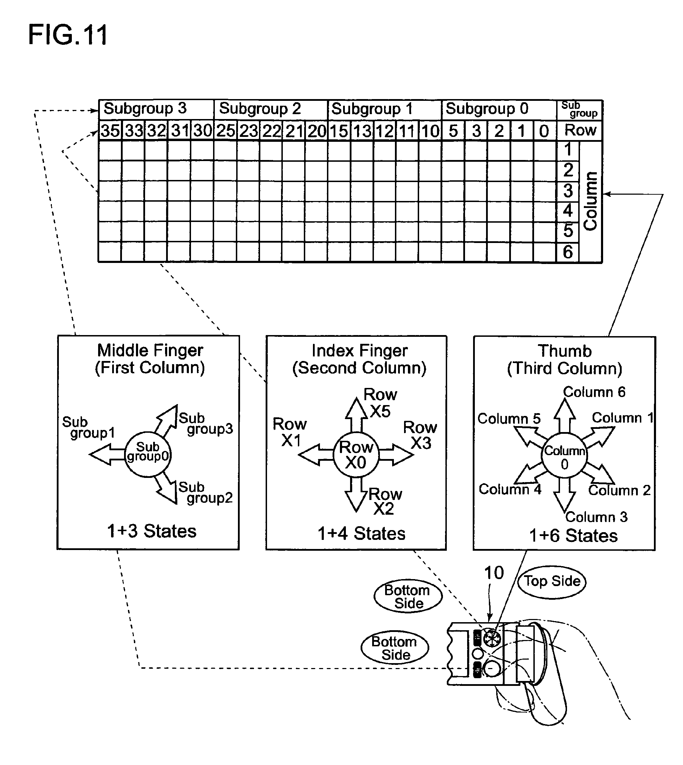

FIG. 11 is a diagram illustrating a method of deciding an information code by the input keys. In the following explanation, a first state is a state where the key tops 50 of the input keys 40, 41, 42, and 43 are pressed in the lower left direction to turn on the switches 52, a second state is a state where those key tops are pressed in the downward direction to turn on the switches 52, a third state is a state where those key tops are pressed in the lower right direction to turn on the switches 52, a fourth state is a state where those key tops are pressed in the upper right direction to turn on the switches 52, a fifth state is a state where those key tops are pressed in the upward direction to turn on the switches 52, a sixth state is a state where those key tops are pressed upper right direction to turn on the switches 52, and a null state is a sate where no key top 50 is pressed. First, the input key 43 corresponding to the tip of the middle finger is operated to select one subgroup from subgroups 0 to 3 of each information code group (first stage). The selection of the subgroup 1 corresponds to the first or sixth state, the selection of the subgroup 2 corresponds to the second or third state, the selection of the subgroup 3 corresponds to the fourth or fifth state, and the selection of the subgroup 0 corresponds to the null state. Next, the input key 42 corresponding to the tip of the index finger is operated to select one row from five rows of the subgroup selected by the middle finger (rows 0 to 5 in case of the subgroup 0, rows 10 to 15 in case of the subgroup 1, rows 20 to 25 in case of the subgroup 2, and rows 30 to 35 in case of the subgroup 3) of each information code group (second stage). The selections of the rows 1, 11, 21, and 31 correspond to the first or sixth state, the selections of the rows 2, 12, 22, and 32 correspond to the second state, the selections of the rows 3, 13, 23, and 33 correspond to the third or fourth state, the selections of the rows 5, 15, 25, and 35 correspond to the fifth state, and the selections of the rows 0, 10, 20, and 30 correspond to the null state. Next, the input key 40 corresponding to the tip of the thumb is operated to select one column from six columns of the row selected by the index finger of each information code group (third stage). The selection of a column 1 corresponds to the fourth state, the selection of a column 2 corresponds to the third state, the selection of the column 3 corresponds to the second state, the selection of the column 4 corresponds to the first state, the selection of the column 5 corresponds to the sixth state, and the selection of the column 6 corresponds to the fifth state. An input candidate code is selected through the above-described operations. Even if all of the input keys are simultaneously operated, shifts of the states of the individual keys do not synchronize with one another, and the other states are temporary skipped before the operation state turns to be an intended state by operating the individual input keys. It is necessary to decide information codes by operating the individual keys at the intended states. Accordingly, a predetermined state of the input key is preset, and the information code corresponding to a state right before the input key becomes the predetermined state is taken as a decided information code. For example, changing the state of the input key 40 operated by the tip of the thumb into a non-operation state (row 0) is taken as a timing of deciding the information code. In the operation of the input key 40 by the tip of the thumb in the third stage, it is possible to continuously carry out selection of an input candidate code and an acceptance-decision operation. Accordingly, in a case where the acceptance-decision operation is not carried out by operating the input key 40 by the tip of the thumb, the selected input candidate code may be replaced, and the information code group selected by operating the input keys 42 and 43 by the tips of the index and middle fingers may be replaced. The information code groups corresponding to the individual input keys are not limited to those above, and the information code groups corresponding to the individual input keys may be changed.

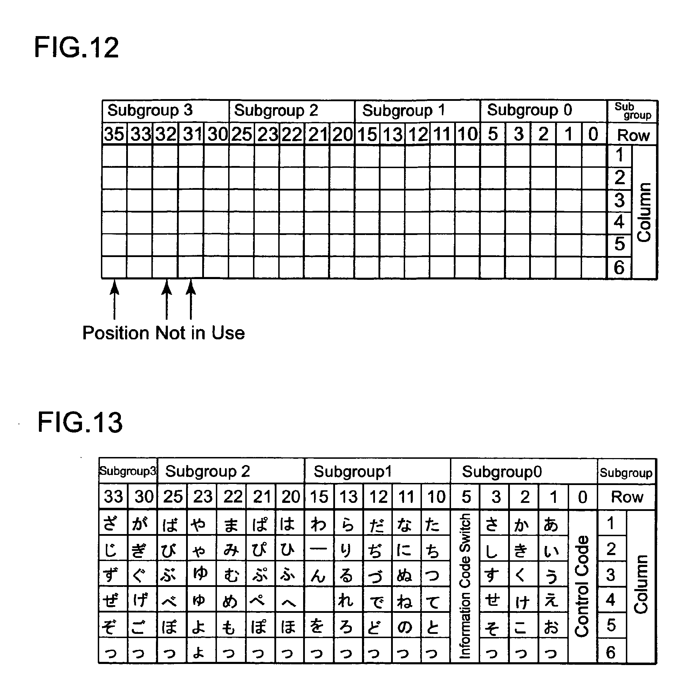

FIG. 12 is a diagram illustrating the information codes which are not used as the individual information codes in an information code table. The information codes which are not used as the individual information codes in the information code table are the rows 31, 32, and 35 of the subgroup 3. This is because that it is difficult to put force on the tips of the index and middle fingers to input those information codes, making it difficult to displace the input keys 42 and 43 in such a way as to correspond to the information codes.

FIG. 13 is a diagram illustrating a Japanese information code table. The rows of HIRAGANA (row of "A", row of "KA", and the like) roughly correspond to the rows which are selected by operating the input keys 42 and 43 by the tips of the index and middle fingers. In this case, the rows of HIRAGANA frequently used correspond to the rows which are easy to select by operating the input keys 42 and 43 by the tips of the index and middle fingers. The columns of HIRAGANA (for example, "A", "I", "U", "E", "O", and "tsu" in case of the row of "A") correspond to the columns which are selected by operating the input key 40 by the tip of the thumb.

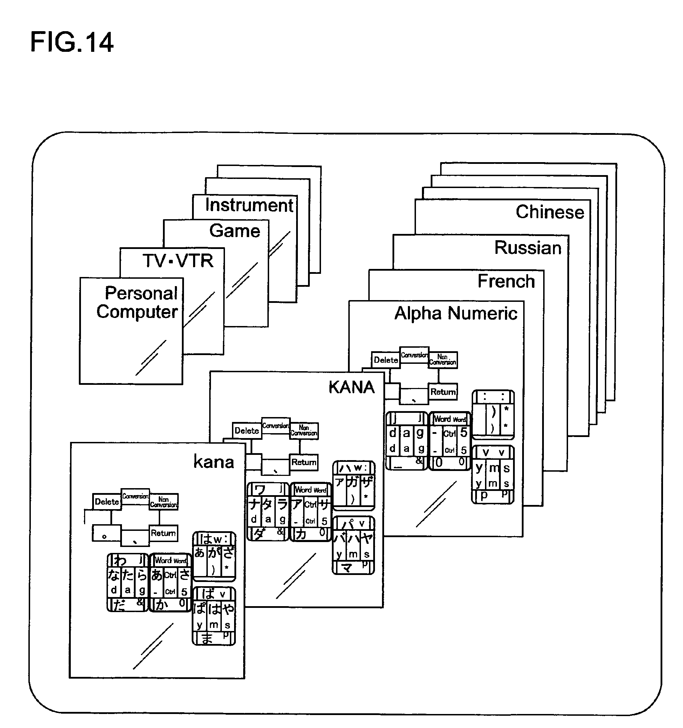

**FIG. 14** is a diagram illustrating examples of the information codes. Replacement codes for information code tables are allocated to some of the information code tables, so that when the replacement codes are selected, the information code tables are replaced. Language characters such as "kana", "KANA", "alphanumeric" and the like or functions corresponding to the electronic apparatus can be considered as the information code tables. The information code data and the guidance screen data can be externally read out from the memory device 82.

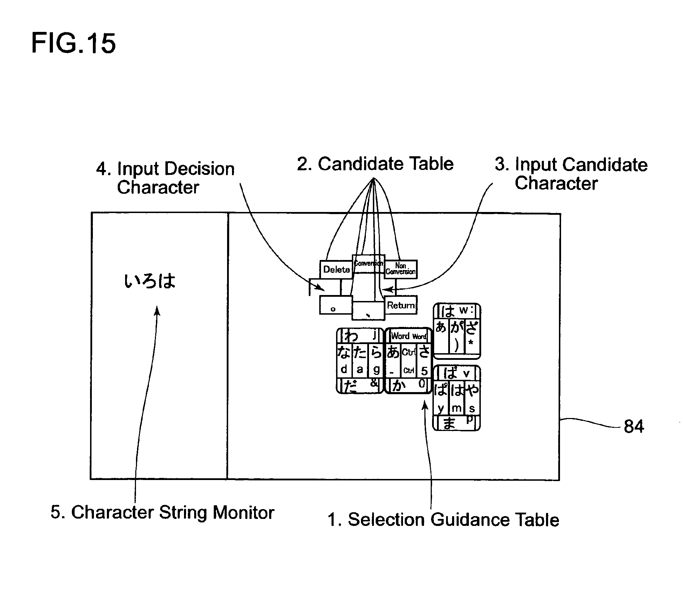

FIG. 15 is a diagram illustrating an example of a Japanese-input screen which is displayed on the display apparatus 84. The screen is constituted by fields of "1. Selection guidance table", "2. Candidate table", "3. Input candidate character", "4. Input decision character", and "5. Character series monitor".

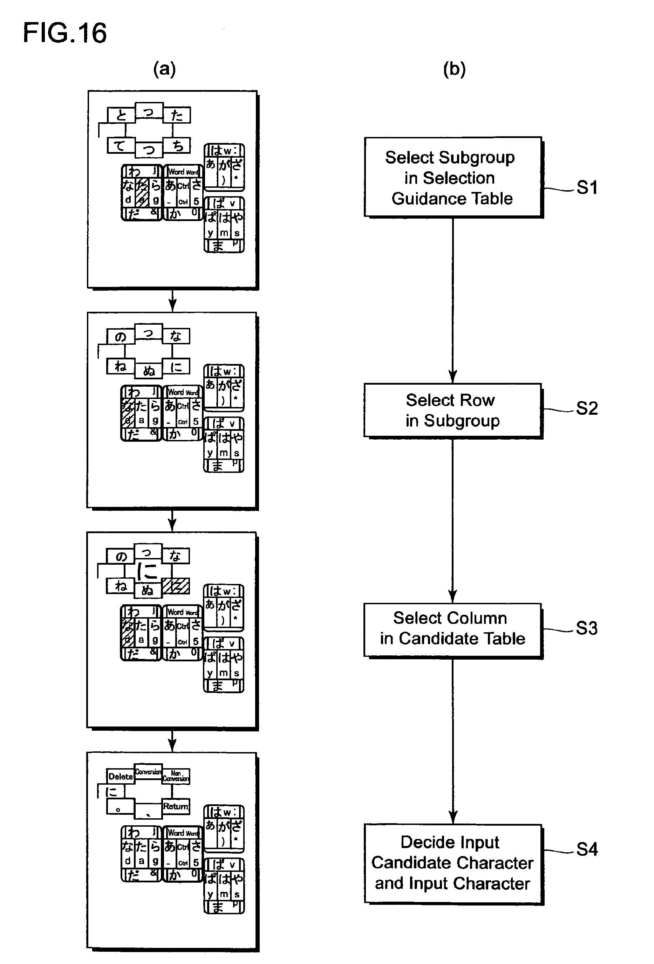

FIG. 16 is a diagram illustrating character input procedures and examples of the screens of the display apparatus which are displayed then. FIG. 16(a) is a diagram illustrating the screens of the display apparatus 84 corresponding to the character input procedures, and FIG. 16(b) is a flowchart showing the character input procedures. First, the input key 43 corresponding to the tip of the middle finger is operated to select a subgroup of the selection guidance table (S 1). When the subgroup is selected, the frame of the selected subgroup is emphatically displayed. Next, the input key 42 corresponding to the tip of the index finger is operated to select a row in the subgroup (S2). When the row is selected, the colors of the characters in the selected row are changed and emphatically displayed, and a list of the characters in each column is displayed on the candidate table. Next, the input key 40 corresponding to the tip of the thumb is operated to select a column in the candidate table (S3). When the column of candidates is selected, the color of a selected character is changed and emphatically displayed, and an input candidate character is displayed. The above-described orders may be simultaneous, or the orders may be interchanged with one another. Next, with the input key 40 corresponding to the thumb being in a non-operated state, this becomes the acceptance-decision operation, and the input candidate character displayed just before is decided as an input character, displayed in the input decision character field, and added in the character series monitor (S4). The arrangement of the subgroups of the selection guidance table, the arrangement of the rows in the selection guidance table, and the arrangement of the columns of the candidate table are roughly match the directions of forces which are applied to the input keys. The candidate table is so arranged as to surround the input candidate character, and the input decision character field is arranged adjacent to the input candidate character table.

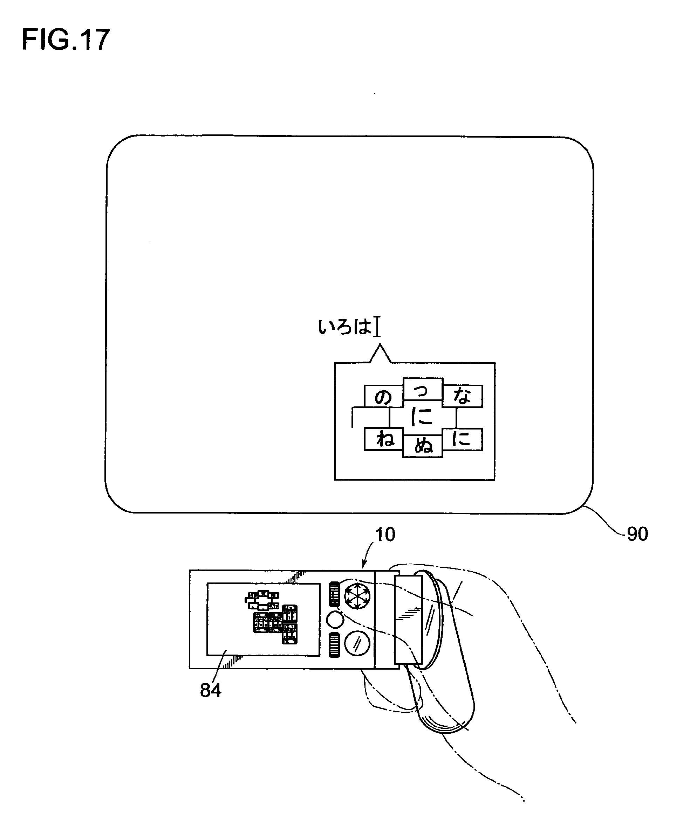

FIG. 17 is a diagram illustrating an example of a case where an electronic apparatus is remotely operated by the input device 10. In a case where the electronic apparatus is remotely operated by the input device 10, all of or a part of the display of the display apparatus 84 of the input device 10 is displayed on a screen 90 of the electronic apparatus. A personal computer or the like can be considered as the electronic apparatus.

According to the embodiment, the hold member 16 is held by one hand, the input keys which are provided on that portion where the input keys are operable by the plural fingertips of the one hand holding the hold member 16 are changed into the plural states by the plural fingertips of the one hand holding the hold member 16, and the plural states are detected. The information codes corresponding to the detected signals are input into the electronic apparatus. Accordingly, since the input keys detect the multiple signals, and the information codes are input into the electronic apparatus by the detection operations of the input keys, it is possible to input the multiple information codes fast with the input device carried by one hand.

According to the embodiment, as the input device are opened into an approximately L shape in such a way that the angle between the central axis of the main body 12 in the longitudinal direction and the central axis of the hold member 16 becomes roughly orthogonal, the display device 84 can be turned in the direction of the line of sight when the input device 10 is held.

According to the embodiment, since the space of the base member 14 is formed between the main body 12 and the hold member 16 when the input device 10 is used, the fourth finger fits into the space of the base member 14 when the hold member is held by the finger cushion of the thumb, the fourth finger and the little finger, thereby allowing the tip of the middle finger to direct further downward.

According to the embodiment, as the unlock pins 20 and the neighborhood of the axis A are depressed by the tip of the thumb, the hold member 16 rotates around the axis B, and the main body 12 and the hold member 16 rotate around the axis A in the direction in which the main body 12 and the hold member 16 face each other in response to the rotation of the hold member 16 around the axis B, thereby folding the input device 10, thus and facilitating the operation for storage for portability.

According to the embodiment, the rotation of the hold member 16 around the axis B from the state where the input device 10 is folded makes the input device 10 be in the use state, thus facilitating the initiation of entry from the storage state for portability.

According to the embodiment, as the base member 14 is provided with the auxiliary retainer 22 into which the finger cushion of the thumb fits with the hold member 16 held, the input device 10 can be firmly held.

According to the embodiment, as the input keys are provided on the top and bottom sides of the main body 12, the holding of the hold member by the finger cushion of the thumb, the fourth finger, and the little finger enables the operations of the input keys 40 and 41 on the top side of the main body 12 by the tip of the thumb, and the operations of the input keys 42 and 43 on the bottom side of the main body 12 by the tips of the index and middle fingers.

According to the embodiment, since the opening of the key top 50 of the input key is formed in a shape into which the tips of the thumb, index finger and middle finger fit, and in such a shape and/or of a material that applies frictional force to the fingers, it is possible to operate the input keys without removing the fingers from the input keys.

According to the embodiment, the input key is restorable in the circumferential direction by the three-dimensional cam structure which controls the direction of the parallel movement, so that the input key, when operated, is guided in the operational direction, thereby preventing a wrong operation.

According to the embodiment, since the three switches operable in the Z-direction are mounted underneath the key top 50, and the switches are structured in such a way that a single switch or two switches are simultaneously turned on/off, seven positions can be detected by the three switches.

According to the embodiment, because a candidate table is selected first, an input candidate code is selected next, then an input code is decided through the acceptance-decision operation, and the intermediate state on which the acceptance-decision operation is not performed is neglected, a wrong operation in the input operation can be surely prevented.

According to the embodiment, as a single information code is not allocated to the combination that makes the operations of the input keys by the individual fingertips difficult, the operability in the input operation can be improved.

According to the embodiment, since the rows of HIRAGANA roughly correspond to the rows to be selected through the operations of the input keys 42 and 43 by the tips of the index and middle fingers, and the columns of HIRAGANA correspond to the columns to be selected through the operation of the input key 40 by the tip of the thumb, it is easy to memorize the locations of the information codes.

According to the embodiment, since the information code table is replaceable, it is possible to realize the input device which are compatible with multiple languages and multiple functions.

According to the embodiment, since the information code data and the guidance screen data are externally readable from the memory device 82, interlocking with an arbitrary apparatus is enabled, thereby providing a programmable input device.

According to the embodiment, the selection guidance table corresponding to the subgroups and rows of the information code table, the candidate table corresponding to the columns of the information code table, the input candidate characters and the input decision characters are displayed, thus facilitating the operations of the input keys by the individual fingertips.

According to the embodiment, the arrangement of the subgroups of the selection guidance table, the arrangement of the rows in the subgroups of the selection guidance table, and the arrangement of the columns of the candidate table are roughly match with the directions of the forces which are applied to the input keys, thus facilitating the operations of the input keys by the individual fingertips further.

According to the embodiment, the candidate table is so arranged as to surround the input candidate character, and the input-decision-character field is arranged adjacent to the candidate table, so that the line of sight does not shift at the time of the input operation, thereby ensuring fast input.

Further, according to the embodiment, in a case where the electronic apparatus is remotely operated by the input device 10, all of or a part of the display of the display apparatus 84 of the input device 10 is displayed on the screen of the electronic device, so that the line of sight does not shift between the display apparatus 84 of the input device 10 and the screen of the electronic apparatus at the time of the input operation, thereby ensuring fast input.

In the embodiment, the input keys 40, 41, 42, 43, and 60 correspond to the "operation section" as set forth in the claims, the MPU 80 and the memory device 82 correspond to the "processor" as set forth in the claims, and the display apparatus 84 corresponds to the "display section" as set forth in the claims.

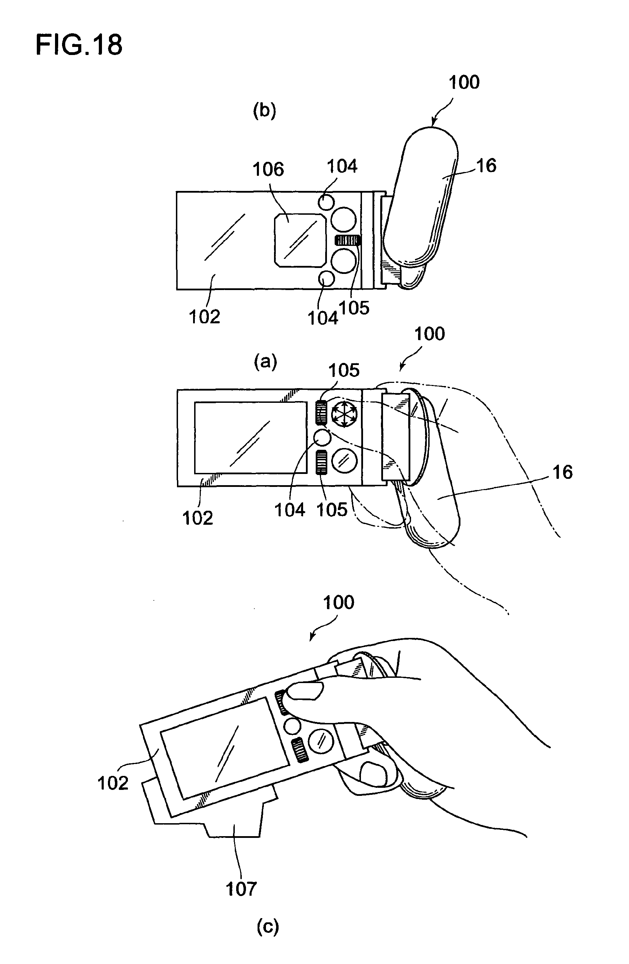

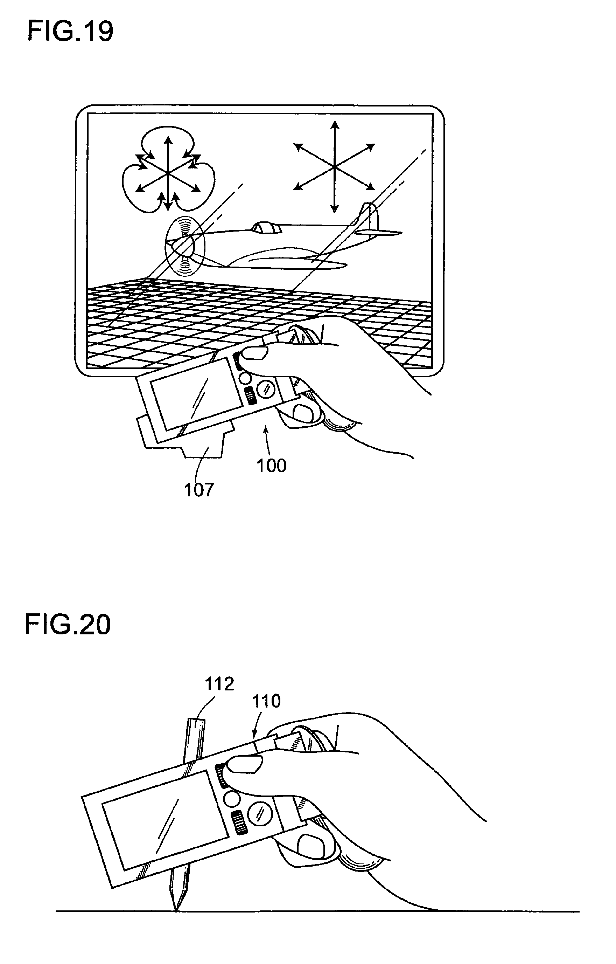

Next, a second embodiment of the input device according to the invention will be explained. FIGS. 18 and 19 are diagrams for explaining the second embodiment of the input device of the invention. In the embodiment, the same structure portions as those of the first embodiment will be denoted by the same reference numbers to avoid repeating their descriptions.

FIG. 18 is a diagram illustrating an input device 100 of the embodiment. FIG. 18(a) is a front view of the input device 100, FIG. 18(b) is a back view thereof, and FIG. 18(c) is a front view thereof in a case where a main body 102 is provided with a mouse 107. The input device 100 is the input device 10 including a main body 12 provided with analog input sections. Analog data input devices such as a mouse, a pointing stick, a pointing pad, a dial rotary encoder, a joystick, and an optical sensor are considered as the analog input sections. The input device 100 has a main body 102 which is the main body 12 provided with the analog input sections. The main body 102 is provided with one pointing stick and two dial rotary encoders 105 on its top side, and two pointing sticks 104, one dial rotary encoder 105 and one pointing pad 106 on its bottom side. The analog input sections on the top side of the main body 102 are laid out at those locations where those analog input sections are operable by a tip of a thumb of one hand holding the hold member 16. The analog input sections on the bottom side are laid out at locations where the analog input sections are operable by a tip of an index or middle finger of the one hand holding the hold member 16. A mouse 107 is provided on the lower portion of the main body 102 or the lower portion of the hold member 16. The analog input sections are used for inputting analog data like coordinate data. In a case where the mouse 107 and the analog input sections on the substrate of the main body 102 are used in combination with one another, it is possible to input rough coordinate data by the mouse 107, and input precision coordinate data by the analog input sections on the substrate of the main body 102.

FIG. 19 is a diagram illustrating an example of a multidimensional analog input by the input device 100. Six or more dimensions are simultaneously controlled by the mouse 107 provided on the lower portion of the main body 102, the analog input sections provided on the top side of the main body 102, and the analog input sections provided on the bottom side of the main body 102.

According to the embodiment, because the input device 100 has the analog input sections, it is possible to input analog data and an information code simultaneously.

According to the embodiment, it is possible to carry out a six-dimensional input of locations and directions, and this makes it possible to control the location and posture of an object in a space in real time.

Next, a third embodiment of the input device according to the invention will be explained. FIG. 20 is a diagram for explaining the third embodiment of the input device of the invention. The same structure portions as those of the first embodiment will be denoted by the same reference numbers to avoid repeating their descriptions.

FIG. 20 is the diagram illustrating an input device 110 of the embodiment. The input device 110 is the input device 10 of the first embodiment on which fixing means for fixing a writing tool 112 is provided. The writing tool 112 may be a generally-used writing tool, or may be with only a writing tip exclusive for the input device 110.

According to the embodiment, because the fixing means for fixing the writing tool 112 is provided on the input device 110, it is possible to continuously carry out entry of an information code and a writing work without changing the hold.

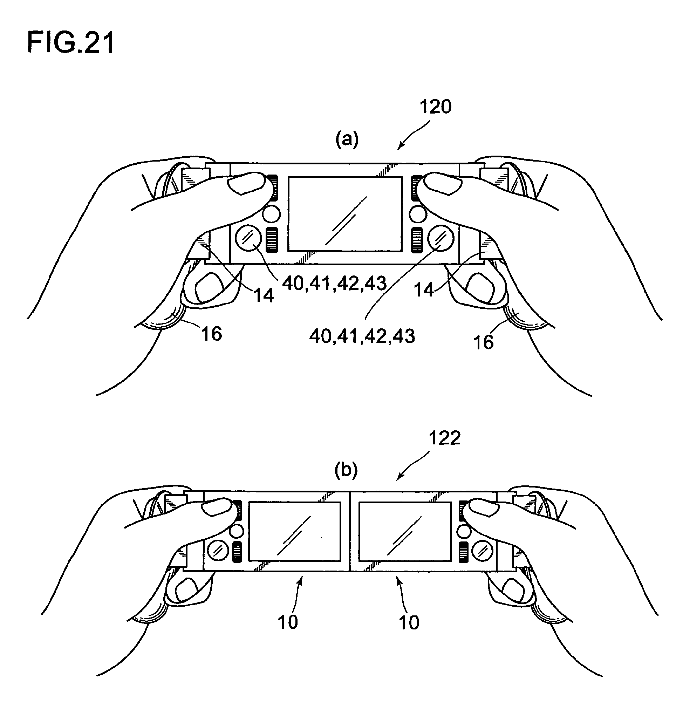

Next, a fourth embodiment of the input device according to the invention will be explained. FIG. 21 is a diagram for explaining the fourth embodiment of the input device according to the invention. In the embodiment, the same structure portions as those of the first embodiment will be denoted by the same reference numbers to avoid repeating their descriptions.

FIG. 21 is a diagram illustrating input devices 120 and 122 of the embodiment. FIG. 21(a) is the diagram illustrating the input device 120, and FIG. 21(b) is the diagram illustrating the input device 122. The input device 120 is symmetrically provided with the base sections 14, the hold members 16, and the input keys 40, 41, 42, and 43. The input device 122 is the input devices 10 which are symmetrically provided each other.

According to the embodiment, because the input devices 120 and 122 can be operated by both hands, it is possible to input information codes further fast.

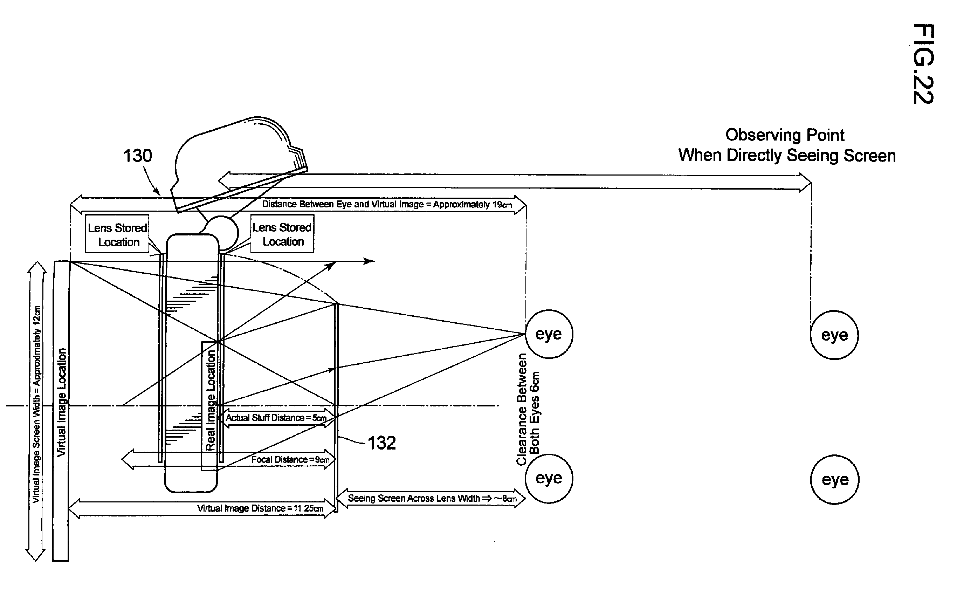

Next, a fifth embodiment of the input device according to the invention will be explained. FIG. 22 is a diagram for explaining the fifth embodiment of the input device according to the invention. In the embodiment, the same structure portions as those of the first embodiment will be denoted by the same reference numbers to avoid repeating their explanations.

FIG. 22 is the diagram illustrating an input device 130 of the embodiment. The input device 130 is the input device 10 of the first embodiment provided with a lens which magnifies the display apparatus 84. The lens is the Fresnel lens132 which has an equal size to the top side of the main body 12 of the input device 10. The Fresnel lens 132 is coupled to the main body 12 through a pantograph structure and put in the top side of the main body 12, or the Fresnel lens is couple to the main body 12 by two parallel axes and put in the bottom side of the main body 12. In coming close to the Fresnel lens and seeing the display apparatus 84, it is possible to enlarge the angle of view in comparison with directly seeing the display apparatus.

According to the embodiment, because the input device 130 is provided with the Fresnel lens 132 which magnifies the display apparatus 84, it is possible to see the enlarged display apparatus 84.

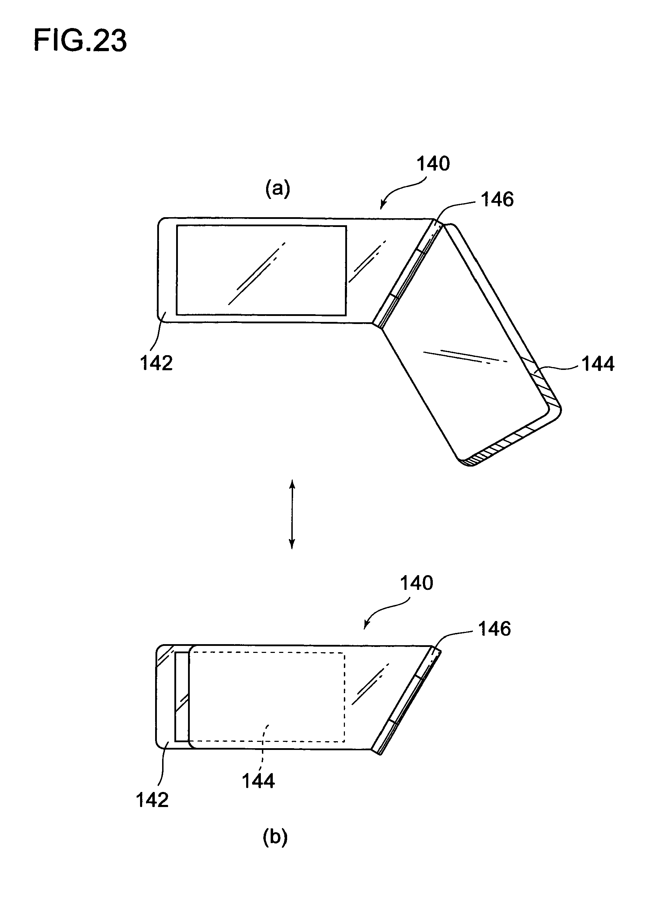

Next, a sixth embodiment of the input device according to the invention will be explained. FIG. 23 is a diagram illustrating the six embodiment of the input device of the invention. In the embodiment, the same structure portions as those of the first embodiment will be denoted by the same reference numbers to avoid repeating their explanations.

FIG. 23 is the diagram illustrating an input device 140 of the embodiment. FIG. 23(a) is a front view of the input device 140 in open mode, and FIG. 23(b) is a front view of the input device 140 in closed mode. The input device 140 generally comprises a main body 142 and a hold member 144 which is held by one hand. The main body 142 is formed in an approximately parallelepiped shape. The right end portion of the main body 142 inclines in such a way that the lower end of the right end portion locates at the oblique lower end of the upper end thereof. The hold member 144 is formed in an approximately parallelepiped shape. The upper end portion of the hold member 142 inclines in such a way that the left end of the upper end portion locates at the oblique lower end of the right end thereof. The right end portion of the main body 142 and the upper end portion of the hold member 144 are coupled together by an axis 146 which is roughly parallel to the right end portion of the main body 142. The main body 142 can have the same structure and function as those of the main body 12 of the first embodiment. The main body 142 and the hold member 144 rotate around the axis 146, and make the input device changeable into open mode of an approximately L shape in which the hold member 144 can be so held as to make non-illustrated input keys of the main body 142 operable, and closed mode of an approximately parallelepiped shape in which the main body 142 and the hold member 144 are folded over each other. The input device 140 is for a right hand which hold the hold member 144, but the input device for a left hand can be realized by coupling the upper end portion of the hold member to the left end portion of the main body so that the hold member is to be held by the left hand.

According to the embodiment, since the input device 140 is changeable into open mode of the approximately L shape in which the hold member 144 can be so held as to make non-illustrated input keys of the main body 142 operable, and closed mode of the approximately parallelepiped shape in which the main body 142 and the hold member 144 are folded over each other, it is possible to open the main body 142 and the hold member 144 in the approximately L shape and input the information codes when in use, and fold and close the main body 142 and the hold member 144 in the approximately parallelepiped shape for storage when not in use.

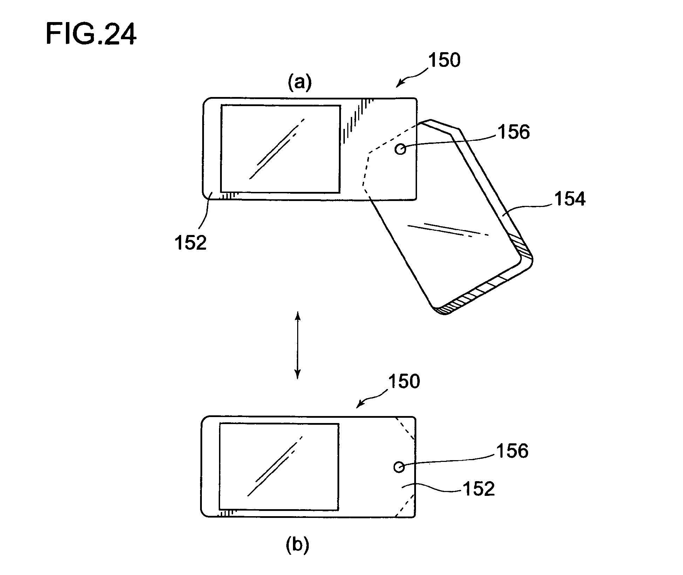

Next, a seventh embodiment of the input device according to the invention will be explained. FIG. 24 is a diagram for explaining the seventh embodiment of the input device of the invention. In the embodiment, the same structure portions as those of the first embodiment will be denoted by the same reference numbers to avoid repeating their explanations.

FIG. 24 is the diagram illustrating an input device 150 of the embodiment. FIG. 24(a) is a front view of the input device 150 in open mode, and FIG. 24(b) is a front view of the input device 150 in closed mode. The input device 150 generally comprises a main body 152 and a hold member 154 which is held by one hand. Both of the main body 152 and hold member 154 are formed in approximately parallelepiped shapes. One end portion of the main body 152 and one end portion of the hold member 154 are coupled together by an axis 156 which is roughly vertical to the front side of eth main body 152. The main body 152 can have the same structure and function as those of the main body 12 of the first embodiment. The main body 152 and the hold member 154 rotate around the axis 156 and changeable into open mode of an approximately L shape in which the hold member 154 can be so held as to make non-illustrated input keys of the main body 152 operable, and closed mode of an approximately parallelepiped shape in which the main body 152 and the hold member 154 are folded over each other. Open mode in which the hold member 154 is rotated counterclockwise to make the input device be in the approximately L shape from closed mode is a state where it is possible to do the input operation by the right hand, and open mode in which the hold member 154 is rotated clockwise to make the input device be in the approximately L shape from closed mode is a state where it is possible to do the input operation by the left hand.

According to the embodiment, since the input device 150 is changeable into open mode of the approximately L shape in which the hold member 154 can be so held as to make non-illustrated input keys of the main body 152 operable, and closed mode of the approximately parallelepiped shape in which the main body 152 and the hold member 154 are folded over each other, it is possible to open the main body 152 and the hold member 154 in the approximately L shape and input the information codes when in use, and fold and close the main body 152 and the hold member 154 in the approximately parallelepiped shape for storage when not in use.

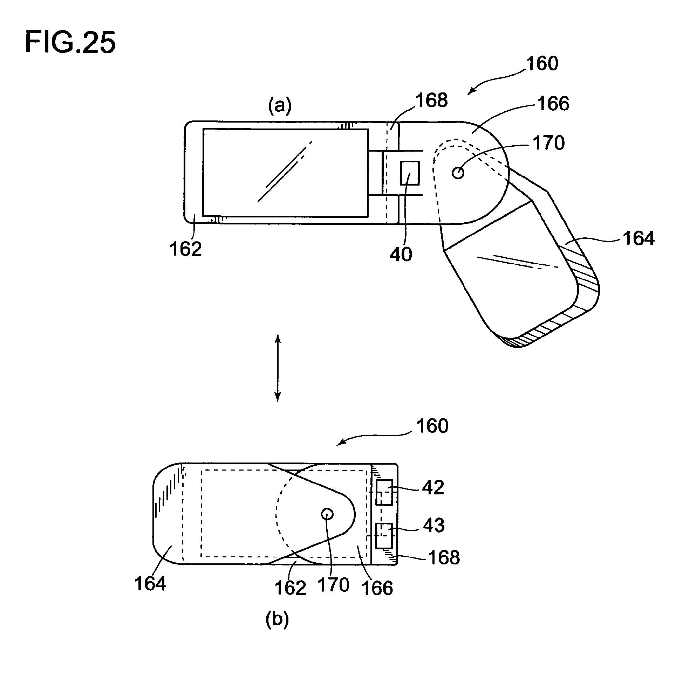

Next, an eighth embodiment of the input device according to the invention will be explained. FIG. 25 is a diagram for explaining the eighth embodiment of the input device of the invention. In the embodiment, the same structure portions as those of the first embodiment will be denoted by the same reference numbers to avoid repeating their explanations.

FIG. 25 is the diagram illustrating an input device 160 of the embodiment. FIG. 25(a) is the diagram of the input device 160 in open mode, and FIG. 25(b) is a front view of the input device 160 in closed mode. The input device 160 generally comprises a main body 162, a hold member 164 which is held by one hand, and a base member 166 which rotatably couples the main body 162 with the hold member 164, and has the input keys 40, 42 and 43 of the main body 12 of the first embodiment. The main body 162 and the base member 167 are coupled together by an axis 170 which is roughly vertical to the top side of he hold member. The hold member 164 and the base member 166 are coupled together by an axis 170 which is roughly vertical to the top side of the hold member 164. The main body 162 and the hold member 164 rotate around the axis 168 and the axis 170, respectively, and changeable into open mode of an approximately L shape in which the hold member 154 can be so held as to make the input keys 40, 42, and 43 of the base member 166 operable, and closed mode of an approximately parallelepiped shape in which the main body 162, the hold member 164 and the base member 166 are folded over one another. Open mode in which the base member 166 and the hold member 164 are rotated in the front direction and the hold member 164 is rotated clockwise to make the input device be in the approximately L shape from closed mode is a state where it is possible to do the input operation by the right hand, and open mode in which the base member 166 and the hold member 164 are rotated in the front direction and the hold member 164 is rotated counterclockwise to make the input device be in the approximately L shape from closed mode is a state where it is possible to do the input operation by the left hand.

According to the embodiment, since the input device 160 is changeable into open mode of the approximately L shape in which the hold member 164 can be so held as to make the input keys 40, 42, and 43 operable, and closed mode of the approximately parallelepiped shape in which the main body 162, the hold member 164 and the base member 166 are folded over one another, it is possible to open the main body 162 and the hold member 164 in the approximately L shape and input the information codes when in use, and the main body 162 and fold and close the hold member 164 in the approximately parallelepiped shape for storage when not in use. Since the input keys 40, 42, and 43 are not provided on the main body 162, it is possible to replace the main body 162 at a low cost.

The input device of the invention can be provided with electronic-apparatus functions. A cellular-phone function, a general-purpose-remote-controller function, an electronic-dictionary function, a PDA function, an electronic-instrument function, a machine-controlling-apparatus function and the like can be considered as the electronic-apparatus functions.

### Brief Description of the Drawings

FIG. 1 is a diagram illustrating the contour of a first embodiment of an input device according to the invention.
FIG. 2 is a diagram illustrating a state where the input device in FIG. 1 is held by one hand.
FIG. 3 is a diagram illustrating an opening/closing operation of a main body and a hold member of the input device in FIG. 1.
FIG. 4 is a diagram illustrating an example of a mechanism which interlocks the rotation of the main body of the input device in FIG. 1 around an axis A with the rotation of the hold member around an axis B.
FIG. 5 is a diagram illustrating another example of a mechanism which interlocks the rotation of the main body of the input device in FIG. 1 around the axis A with the rotation of the hold member around the axis B.
FIG. 6 is a diagram illustrating the arrangement of input keys of the input device in FIG. 1.
FIG. 7 is a diagram illustrating the shape of the input key of the input device in FIG. 1.
FIG. 8 is a diagram illustrating the principle of the input key of the input device in FIG. 1.
FIG. 9 is a diagram illustrating the structure of the input key of the input device in FIG. 1.
FIG. 10 is a block diagram illustrating the structure of the main body of the input device in FIG. 1.
FIG. 11 is a diagram illustrating a method of deciding input codes made by the input keys of the input device in FIG. 1.
FIG. 12 is a diagram illustrating those input codes in an input code table of the input device of FIG. 1 which are not used.
FIG. 13 is a diagram illustrating a Japanese input code table of the input device in FIG. 1.
FIG. 14 is a diagram illustrating examples of the input codes for the input device in FIG. 1.
FIG. 15 is a diagram illustrating an example of a Japanese input screen which is displayed on a display apparatus of the input device in FIG. 1.
FIG. 16 is a diagram illustrating character input procedures of the input device in FIG. 1, and examples of the screens of the display apparatus displayed then.
FIG. 17 is a diagram illustrating an example of a case where an electronic apparatus is remotely controlled by the input device in FIG. 1.
FIG. 18 is a diagram illustrating an input device according to a second embodiment of the invention.
FIG. 19 is a diagram illustrating an example of multidimensional analog input of the input device in FIG. 16.
FIG. 20 is a diagram illustrating an input device according to a third embodiment of the invention.
FIG. 21 is a diagram illustrating an input device according to a fourth embodiment of the invention.
FIG. 22 is a diagram illustrating an input device according to a fifth embodiment of the invention.
FIG. 23 is a diagram illustrating an input device according to a sixth embodiment of the invention.
FIG. 24 is a diagram illustrating an input device according to a seventh embodiment of the invention.
FIG. 25 is a diagram illustrating an input device according to an eighth embodiment of the invention.

### Description of the Reference Numbers

- 10: Input Device
- 12: Main Body
- 14: Base Member
- 16: Hold Member
- 40, 41, 42, 43: Input keys
- 84: Display Apparatus

## Claims

1. An input device which inputs information into an electronic apparatus, comprising:
a hold member which is held by one hand; and
an operation section which is provided on that portion where said operation section is operable by a tip of a finger of said one hand holding said hold member, changes into plural states when operated with said tip of said finger unreleased, and is for inputting information into said electronic apparatus which detects said plural states.

2. The input device according to claim 1, wherein said operation section is provided approximately perpendicular to an up and down direction of said hold member.

3. An input device which inputs information into an electronic apparatus, comprising:
a main body with an operation section for inputting information into said electronic apparatus; and
a hold member which is held by one hand,
wherein said hold member is coupled to said main body, and said main body and said hold member are changeable into open mode in which said hold member can be so held as to make said operation section operable, and closed mode in which said main body and said hold member are folded over each other.

4. The input device according to claim 3, wherein
said main body and said hold member are coupled together via a base member,
said main body and said hold member are rotatably coupled to said base member, and
a rotation axis at which said main body and said base member are coupled together is approximately perpendicular to a rotation axis at which said hold member and said base member are coupled together, and said main body and said hold member become said open mode of an approximately L shape and closed mode of an approximately parallelepiped shape as said main body and said hold member respectively rotate around said rotation axes.

5. An input device which inputs information into an electronic apparatus, comprising a main body, a hold member which is held by one hand, and a base member which rotatably couples said main body and said hold member together, and has an operation section for inputting information into said electronic apparatus,
wherein as said main body and said hold member respectively rotate around said rotation axes, a rotational axis at which said main body and said base member are coupled together and a rotation axis at which said hold member and said base member are coupled together are approximately perpendicular to each other, and said main body and said hold member are changeable into open mode of an approximately L shape in which said hold member can be so held as to make said operation section operable, and closed mode in which said main body and said hold member are folded over each other.

6. An input device which inputs information into an electronic apparatus, comprising a main body with an operation section for inputting information into said electronic apparatus, and a hold member which is held by one hand,
wherein said main body and said hold member are coupled together via a base member,
said main body and said hold member are rotatably coupled to said base member, and
rotation of the rotational axis at which said main body and said base member are coupled together and rotation of the rotation axis at which said main body and said base member are coupled together are interlocked with each other.

7. The input device according to claim 6, wherein said rotation of said rotational axis at which said main body and said base member are coupled together and said rotation of said rotational axis at which said hold member and said base member are coupled together can be locked and unlocked in said open mode.

8. The input device according to claim 7, comprising an unlock pin which unlock a state where said rotation of said rotation axis at which said main body and said base member are coupled together is locked with said rotation of said rotation axis at which said hold member and said base member in said open mode,
wherein said unlock pin is operable by a tip of any finger of said one hand holding said hold member.

9. An input device which inputs information into an electronic apparatus, comprising a main body with an operation section for inputting information into said electronic apparatus, and a hold member which is held by one hand,
wherein said operation section is provided on top and bottom sides of said main body.

10. The input device according to any one of claims 1 to 9, wherein said operation section is formed in a shape into which a finger tip fits.

11. The input device according to any one of claims 1 to 9, wherein said operation section is so formed as to be restricted in parallel movement in accordance with said plural states, and is restorable in a circumferential direction.

12. The input device according to any one of claims 1 to 11, wherein said operation section has a plurality of switches, and detects said plural states with one of or said plurality of switches.

13. An input device which inputs information into an electronic apparatus, comprising:
an operation section which changes into plural states and is for inputting information into said electronic apparatus which detects said plural states; and
a processor which allocates information codes in association with said plural states of said operation section,
wherein said information codes allocated by said processor are input into said electronic apparatus.

14. The input device according to claim 13, wherein said processor has groups of information codes which are hierarchized in association with said operation section and associated with said plural states of said operation section, and determines one information code based on selection of one group of information codes by detecting any of said plural states of said operation section.

15. The input device according to claim 14, wherein said processor detects one information code by an acceptance-decision operation at said operation section.

16. The input device according to any one of claims 13 to 15, wherein said processor has an information code which is not used in association with said plural states of said operation section.

17. An input device which inputs information into an electronic apparatus, comprising:
an operation section which changes into plural states, and is for inputting information into said electronic apparatus which detects said plural states; and
a processor which allocates information codes in association with said plural states of said operation sections,
wherein said processor has information codes for replacing some of said information codes.

18. The input device according to any one of claims 13 to 17, wherein said processor ensures external replacement of said information codes.

19. The input device according to any one of claims 13 to 18, wherein said information code comprises a row and a column of Japanese KANA characters.

20. The input device according to any one of claims 1 to 19, comprising a display section which displays said plural states of said operation section, or associations of said plural states of said operation section with said information codes allocated by said processor.

21. The input device according to claim 20, wherein said display section displays said groups of information codes.

22. The input device according to claim 21, wherein said display section displays a direction of a force to be applied to a finger tip for operating said operation section and an arrangement of said groups of information codes in association with each other.

23. The input device according to claim 21 or 22, wherein said display section emphatically displays said selected group of information codes.

24. The input device according to any one of claims 21 to 23, wherein said display section aggregates a candidate table comprising said groups of information codes at a bottom layer, an input-candidate-information code selected from said candidate table, and input-decision-information code decided by said acceptance-decision operation and displays them.

25. The input device according to any one of claims 20 to 24, wherein all of or a part of a display of said display section is displayed on a display section of said electronic apparatus into which said information code is input.

26. An input device which inputs information into an electronic apparatus, comprising an operation section for inputting an information code into said electronic apparatus, and an analog input section for inputting analog information into said electronic apparatus,
wherein said operation section and analog input section are operable simultaneously.

27. The input device according to any one of claims 1 to 26, comprising fixing means for fixing a writing tool.

28. The input device according to any one of claims 1 to 27, wherein said hold member and said operation section are so provided as to enable an input operation with both hands.

29. An input device which inputs information into an electronic device, comprising a display section which displays input information, and allowing a lens which magnifies said display section to be provided.

30. The input device according to any one of claims 1 to 29, having a built-in electronic-apparatus function.
